# EUROPEAN PATENT APPLICATION

(11) **EP 1 601 238 A2**
(43) Date of publication of application: **30.11.2005**
(21) Application number: 05010850.5
(22) Date of filing: 19.05.2005
(51) Int. Cl.: H05H 1/34

(54) **Plasma torch life duration detecting device**

(30) Priority: 24.05.2004 JP 2004152925; 25.01.2005 JP 2005016430
(71) Applicant: Koike Sanso Kogyo Co., Ltd., Tokyo 133 (JP)
(72) Inventor: Koike, Tetsuo c/o Koike Sanso Kogyo Co. Ltd., Edogawa-ku Tokyo (JP); Furujo, Akira c/o Koike Sanso Kogyo Co. Ltd., Edogawa-ku Tokyo (JP)
(74) Representative: Göhring, Robert

(57) **Abstract**

A plasma torch life duration detecting device according to the present invention aims at detecting a life duration of a plasma torch, detecting a life duration of a plasma torch in accordance with a requested processing precision, and detecting contact between a nozzle protection cover and a workpiece at a lower cost. The plasma torch is constructed in such a manner that a nozzle member 3 having an electrical conductivity is disposed outside of an electrode 2 to maintain electrical insulation against the electrode 2, and a nozzle protection cover 4 having an electrical conductivity is disposed outside of the nozzle member 3 to maintain electrical insulation against the nozzle member 3. The plasma torch life duration detecting device is provided with a voltmeter 7 disposed between the nozzle member 3 and the nozzle protection cover 4, for detecting a voltage between the nozzle member 3 and the nozzle protection cover 4. The life duration of the plasma torch (electrode 2, nozzle member 3, nozzle protection cover 4) is detected by use of the voltage detected by the voltmeter 7.

## Description

### BACKGROUND OF THE INVENTION

### 1. Field of the Invention

The present invention relates to a plasma torch life duration detecting device.

### 2. Description of the Background Art

Today, a plasma processing apparatus is widely prevalent that efficiently performs processing such as cutting or welding on a workpiece such as a steel plate or a stainless steel plate. In such a plasma processing apparatus, an arc is formed from an electrode attached to a tip end of a plasma torch towards the workpiece, and a plasma gas is supplied around the ark, whereby a plasma arc is sprayed to the workpiece to melt the workpiece and remove the melted part to cut the workpiece or to weld two sheets of workpieces that are placed to oppose each other by melting the opposing parts of the workpieces.

A typical construction of a plasma torch is such that a nozzle member formed by molding a copper material or the like into a funnel shape is disposed around an electrode to maintain electrical insulation (hereafter simply referred to as "insulation") against the electrode. In addition, a nozzle protection cover formed by molding a copper material or the like into a funnel shape in a similar manner may be disposed around the nozzle member.

The nozzle protection cover has a function of preventing breakage of the nozzle member caused by an impact when the nozzle member bumps against the workpiece or maintaining insulation against the workpiece.

Here, in a transfer type plasma apparatus in which a pilot arc is once formed from the electrode to the nozzle member and then the arc is transferred to form a plasma arc between the electrode and the workpiece, it is essential to construct the nozzle member with a material having an electrical conductivity. Also, the nozzle member and the nozzle protection cover are typically constructed with a copper material because of ease of the molding process and inexpensiveness.

However, when only the nozzle member is disposed around the electrode or when the nozzle member and the nozzle protection cover are disposed around the electrode to be in direct contact with each other to establish electrical connection, the nozzle member or the nozzle protection cover may directly get in contact with the workpiece during the processing, or a sputter that adheres to the nozzle member or the nozzle protection cover may grow to be in indirect contact with the workpiece, whereby the workpiece may have the same electric potential as the nozzle member or the nozzle member via the nozzle protection cover, leading to generation of a so-called double arc in which an arc is formed also between the electrode and the nozzle member. When such a double arc is generated, the electrode, the nozzle member, or the nozzle protection cover may be melted and lost in a short period of time to be broken, thereby raising a problem of an interruption of the processing.

In order to circumvent the aforementioned problem, various techniques have been developed such as a construction in which a nozzle protection cover is provided outside of a nozzle member through the intermediary of an insulating member between the nozzle member and the nozzle protection cover, or a construction in which an insulation treatment is performed on an outer surface of a nozzle protection cover or a nozzle member to form an insulating layer therebetween, so as to maintain electrical insulation of the nozzle protection cover against the nozzle member (see, for example, Japanese Patent No. 3333311).

However, even with these constructions, the tip end of the torch may bump against the workpiece to break the insulating member or the insulating layer disposed between the nozzle member and the nozzle protection cover, or the nozzle member and the nozzle protection cover may be lost by being melted or lost by being burnt to break the insulation due to various reasons such as wear of the electrode, insufficient flow rate of the plasma gas, or setting error of the arc current.

When the nozzle protection cover gets in direct or indirect contact with the workpiece after breakage of the insulation between the nozzle member and the nozzle protection cover, a double arc may be generated between the electrode and the nozzle member or the nozzle protection cover as described above, making it impossible to maintain upkeep of the nozzle member, the nozzle protection cover, and the electrode.

In order to circumvent the aforementioned problem, a technique has been developed that enables protection of a plasma torch respectively by detecting breakage of insulation between the nozzle member and the nozzle protection cover or by detecting contact of the nozzle protection cover or the nozzle member with the workpiece (see Japanese Patent No. 3472625).

On the other hand, the nozzle member and the nozzle protection cover wear in accordance with the use thereof to thereby increase the bore diameter of the nozzle formed at the tip end part to spray the plasma arc. When the nozzle of the nozzle member wears to increase the bore diameter thereof, the shape of the sprayed plasma arc changes to decrease the processing precision. In particular, there is no assurance that the nozzle of the nozzle member increases its bore diameter while holding the circular shape thereof in wearing, so that a difference of processing precision may occur depending on the processing direction.

The electrode also wears in accordance with the use thereof. In this case, control is made to maintain the height of the plasma torch from the workpiece to be constant, the distance between the electrode and the workpiece increases in accordance with the wear of the electrode, thereby decreasing the processing competence of the plasma arc. For this reason, the processing precision decreases in accordance with the wear of the electrode.

The decrease of the processing precision appears as increase of the roughness of the cut surface when the plasma torch is a plasma cutting torch, and appears as decrease of the melted depth when the plasma torch is a plasma welding torch.

The conventional example shown in the above patent document 2 is intended for detecting breakage of insulation between the nozzle member and the nozzle protection cover and detecting contact between the nozzle protection cover and the workpiece, so that it is not intended for detecting decrease in the processing precision (life duration of the plasma torch) .

However, when the insulation between the nozzle member and the nozzle protection cover is broken, the electrode, the nozzle member, and the nozzle protection cover may be broken approximately as soon as the nozzle protection cover gets in contact with the workpiece. For this reason, there is a demand for detecting the danger of breakage before the insulation between the nozzle member and the nozzle protection cover is broken, i.e. detecting the life duration of the plasma torch.

In particular, there is a demand for detecting the life duration of the plasma torch matched with the demanded processing precision in accordance with the intended processing purpose of the plasma torch. For example, when the intended processing purpose is cutting, the demand for the quality of the cut surface is utterly different between the case of precision cutting with small roughness of the cut surface of the workpiece and the case of separation cutting for simple cutting of the workpiece. Namely, in the former case, there is a demand for detecting the limit of use as a life duration for the intended cutting before the breakage of the nozzle member and the nozzle protection cover, while in the latter case, there is a demand for detecting the time point just before the breakage of the nozzle member and the nozzle protection cover as the life duration.

In other words, there is a demand not for detection of breakage of the plasma torch but for finding that the plasma torch has gone beyond a certain limit before reaching the breakage to tell that the plasma torch has reached the expiration of life.

Further, the conventional example described in the aforementioned patent document 2 requires detection means and recognition means for detecting contact between the nozzle protection cover and the workpiece, so that there is a demand for cost reduction.

### SUMMARY OF THE INVENTION

Therefore, the plasma torch life duration detecting device according to the present invention aims at detecting a life duration of a plasma torch, detecting a life duration of a plasma torch in accordance with a requested processing precision, and detecting contact between a nozzle protection cover and a workpiece at a lower cost.

In order to achieve the aforementioned object, the inventors of the present invention have conducted various experiments on the detecting of the life duration of a plasma torch. As a result of this, they have been found out that the life duration of an electrode, a nozzle member, and a nozzle protection cover can be detected by monitoring a voltage between the nozzle member and the nozzle protection cover that are in electrical insulation with each other while generating a plasma arc, and that the contact of the plasma torch with a workpiece can be detected by application of a voltage between the nozzle member and the workpiece without generating a plasma arc.

Namely, it has been found out that the voltage between the nozzle member and the nozzle protection cover increases in accordance with the wear of the electrode and decreases in accordance with the wear of the nozzle member and the nozzle protection cover. The mechanism of the generation of the voltage between the nozzle member and the nozzle protection cover while the plasma arc is being generated is not yet made clear. However, since no voltage is generated between the nozzle member and the nozzle protection cover when the plasma arc is not generated, it is clear that the plasma arc is involved in the voltage generation.

The increase of the voltage between the nozzle member and the nozzle protection cover in accordance with the wear of the electrode seems to be caused by the increase in the distance between the electrode and the workpiece in accordance with the wear of the electrode. The decrease of the voltage between the nozzle member and the nozzle protection cover in accordance with the wear of the nozzle member and the nozzle protection cover seems to be caused by the increase of the thickness of the plasma arc.

Therefore, the limit of the wear of the electrode, the nozzle member, and the nozzle protection cover may be set beforehand, and the voltage value corresponding to this limit may be set. The voltage between the nozzle member and the nozzle protection cover may be measured while a plasma arc is being sprayed from the nozzle member and the nozzle protection cover of the plasma torch. When the measured voltage exceeds the set voltage value, it can be recognized that the plasma torch has reached the expiration of the life duration.

The limit of the wear of the electrode, the nozzle member, and the nozzle protection cover can be set in accordance with the intended processing purpose of the plasma torch. For example, when the processing is cutting and the intended purpose is a so-called precision cutting with enhanced quality of the cut surface, the limit of the wear of the electrode, the nozzle member, and the nozzle protection cover is set to be within a range that can guarantee the precision cutting. When the intended purpose is a so-called separation cutting for cutting the workpiece irrespective of the quality of the cut surface, the limit of the wear is set within a range just before the electrode, the nozzle member, and the nozzle protection cover reach the breakage.

Thus, in the present invention, the limit for detecting the wear of the electrode, the nozzle member, and the nozzle protection cover can be suitably set in accordance with the intended processing purpose.

Therefore, a first construction of a plasma torch life duration detecting device according to the present invention for solving the aforementioned problems is a plasma torch life duration detecting device for detecting a life duration of a plasma torch in which a nozzle member having an electrical conductivity is disposed outside of an electrode to maintain electrical insulation against the electrode, and a nozzle protection cover having an electrical conductivity is disposed outside of the nozzle member to maintain electrical insulation against the nozzle member, the life duration detecting device including voltage detecting means disposed between the nozzle member and the nozzle protection cover, for detecting a voltage between the nozzle member and the nozzle protection cover, wherein the life duration of the plasma torch is detected by use of the voltage detected by the voltage detecting means.

A second construction of a plasma torch life duration detecting device according to the present invention is a life duration detecting device of the first construction, including recognition means for recognizing a degree of wear of the nozzle member and the nozzle protection cover by use of the voltage detected by the voltage detecting means while a plasma arc is being generated.

A third construction of a plasma torch life duration detecting device according to the present invention is a life duration detecting device of the first construction, including recognition means for recognizing the life duration of the nozzle member and the nozzle protection cover when the voltage detected by the voltage detecting means while a plasma arc is being generated exceeds a predetermined value.

A fourth construction of a plasma torch life duration detecting device according to the present invention is a life duration detecting device of the first construction, including: a power source for applying a voltage between the nozzle member and a workpiece; and recognition means for recognizing contact between the nozzle protection cover and the workpiece by use of the voltage detected by the voltage detecting means through application of the voltage by the power source while a plasma arc is not being generated.

A fifth construction of a plasma torch life duration detecting device according to the present invention is a life duration detecting device of the first construction, including recognition means for recognizing a degree of wear of the electrode by use of the voltage detected by the voltage detecting means while a plasma arc is being generated.

A sixth construction of a plasma torch life duration detecting device according to the present invention is a life duration detecting device of the first construction, including recognition means for recognizing the life duration of the electrode, the nozzle member, and the nozzle protection cover when the voltage detected by the voltage detecting means while a plasma arc is being generated goes out of a predetermined range.

A seventh construction of a plasma torch life duration detecting device according to the present invention is a life duration detecting device of the first construction, including recognition means for recognizing contact between the nozzle protection cover and a workpiece by use of the voltage detected by the voltage detecting means while a plasma arc is being generated.

As described above, with the first or second construction of the plasma torch life duration detecting device of the invention, the life duration of the plasma torch can be detected.

With the third construction of the plasma torch life duration detecting device of the invention, the life duration of the plasma torch can be detected in accordance with the requested processing precision.

With the fourth construction of the plasma torch life duration detecting device of the invention, the contact between the nozzle protection cover and the workpiece can be detected with reduced number of detecting means and recognition means and at a lower cost.

With the fifth construction of the plasma torch life duration detecting device of the invention, the life duration of the electrode of the plasma torch can be detected.

With the sixth construction of the plasma torch life duration detecting device of the invention, the life duration of the electrode, the nozzle member, and the nozzle protection cover of the plasma torch can be detected.

With the seventh construction of the plasma torch life duration detecting device of the invention, the contact of the plasma torch with the workpiece can be detected while the plasma arc is being generated.

### BRIEF DESCRIPTION OF THE DRAWINGS

Fig. 1 is a schematic diagram illustrating a construction in which a life duration detecting device of the present invention is attached to a plasma torch provided with a nozzle protection cover on the outside of a nozzle member;
Fig. 2 is a view showing a relationship between the voltage and the degree of wear of the nozzle member and the nozzle protection cover;
Fig. 3 is a view showing examples of the voltage in which the electrode, the nozzle member, and the nozzle protection cover of the plasma torch are (a) in the range such that the quality of the cut surface satisfies an intended cut, (b) in the range such that the electrode 2 is recognized to have reached the expiration of life, (c) in the range such that the nozzle member 3 is recognized to have reached the expiration of life, and (d) in the range such that the nozzle protection cover 4 is in contact with the workpiece W; and
Fig. 4 is a diagram illustrating a construction of recognition means.

### DESCRIPTION OF THE PREFERRED EMBODIMENTS

A plasma torch life duration detecting device according to the present invention is adapted in the following manner. Namely, by measuring and monitoring the voltage between a nozzle member and a nozzle protection cover that are insulated from each other in a state in which a plasma arc is formed between an electrode and a workpiece, the wear of the electrode and the wear of the nozzle member and the nozzle protection cover are detected, and also the contact between the nozzle protection cover and the workpiece is detected. Further, by applying a voltage between the nozzle member and the workpiece in a state in which a plasma arc is not formed, the contact between the nozzle protection cover and the workpiece can be detected.

When the voltage between the nozzle member and the nozzle protection cover is measured and monitored, the voltage to be monitored is set to be a value that can maintain the performance capable of satisfying the intended processing, and thereby the generation of poor processing can be prevented while maintaining the processing precision of the workpiece, so that a stable processing work can be carried out.

In the present invention, the plasma torch can be applied to all the plasma torches that perform an intended processing work by spraying a plasma arc towards a workpiece, such as a plasma cutting torch and a plasma welding torch. However, irrespective of the intended processing purpose, the plasma torch may be any plasma torch having an electrode, a nozzle member, and a nozzle protection cover that is insulated against the nozzle member. For the sake of simplifying the description, in the following Examples, description will be given on a plasma torch that performs plasma cutting for cutting a workpiece.

Therefore, the processing precision refers to the quality including the roughness of the cut surface. The smaller the roughness is, the better the quality is. According as the roughness increases, the quality decreases. The roughness or the quality of the cut surface is divided into models (classes) that are set beforehand to include the magnitude of the roughness, the flatness of the cut surface, the magnitude of the inclination, and the like. With the use of the correspondence between an actual cut surface and these models, the degree of quality (for example, first class, second class, and the like) is determined.

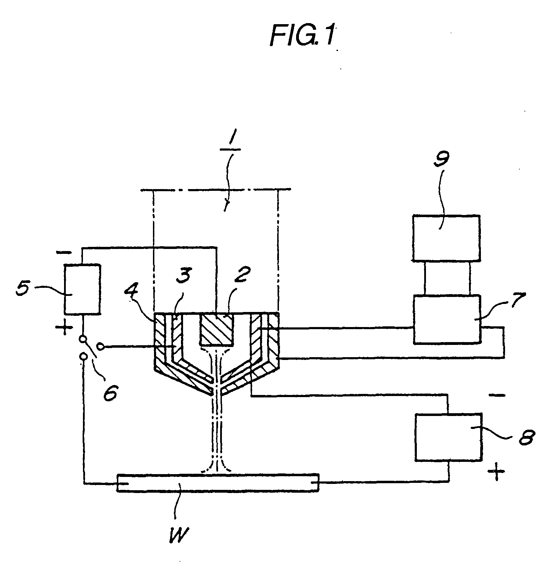

A first embodiment of the plasma torch life duration detecting device according to the invention will be described with reference to the attached drawings. Fig. 1 is a schematic diagram illustrating a construction in which the life duration detecting device of the invention is attached to a plasma torch provided with a nozzle protection cover on the outside of a nozzle member.

### (Plasma torch)

Referring to Fig. 1, at the tip end of a torch main body 1, an electrode 2 is disposed at the central part of the main body 1. A nozzle member 3 obtained by molding copper or the like into a funnel shape and having an electrical conductivity is disposed around the electrode 2 to maintain electrical insulation against the electrode 2. A nozzle protection cover 4 obtained by molding copper or the like into a funnel shape in correspondence with the outer diameter of the nozzle member 3 and having an electrical conductivity is disposed around the nozzle member 3 to maintain electrical insulation against the nozzle member 3.

The insulation between the nozzle member 3 and the nozzle protection cover 4 can be established and maintained by disposing an insulating member (not illustrated) therebetween. Alternatively, the insulation between the nozzle member 3 and the nozzle protection cover 4 can be established and maintained by constructing the two through the intermediary of an insulating layer formed by coating the surface of the nozzle protection cover 4 and/or the nozzle member 3 with an insulating coat film.

A plasma power source 5 is connected between the electrode 2 and a workpiece W having an electrical conductivity such as a steel plate or a stainless steel plate via a switch 6. The electrode 2 is connected to the negative electrode side of the plasma power source 5, and the workpiece W is connected to the positive electrode side of the plasma power source 5. The positive electrode of the plasma power source 5 is also connected to the nozzle member 3 via the switch 6.

### (Life duration detecting device)

Next, the life duration detecting device will be described. A voltmeter 7 serving as voltage detecting means is connected between the nozzle member 3 and the nozzle protection cover 4. Further, recognition means 9 is connected to a terminal on the contact point side of the voltmeter 7.

The voltmeter 7 detects the voltage between the nozzle member 3 and the nozzle protection cover 4 when a plasma arc is generated (at the time of cutting). The voltage detected by the voltmeter 7 is transmitted to the recognition means 9 as a detecting signal.

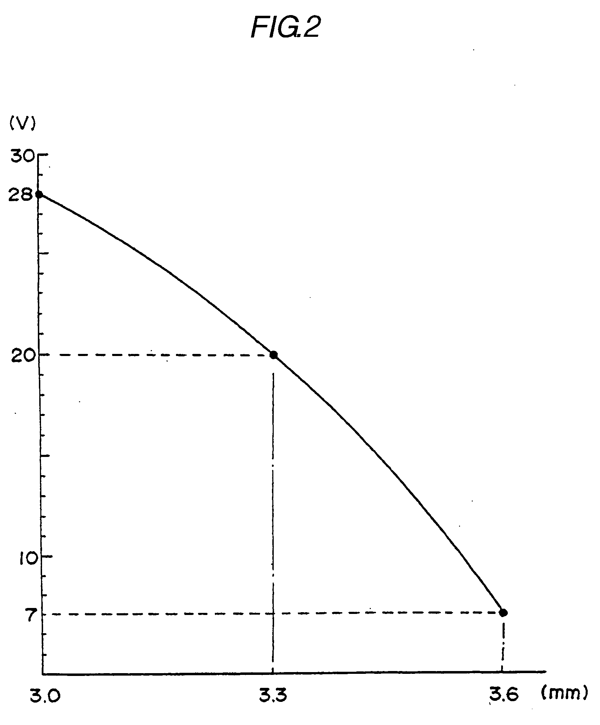

Here, the voltage between the nozzle member 3 and the nozzle protection cover 4 tends to fall according as the nozzle member 3 and the nozzle protection cover 4 wear. Fig. 2 is a view showing a relationship between the voltage and the degree of wear of the nozzle member 3 and the nozzle protection cover 4. The voltage between the nozzle member 3 and the nozzle protection cover 4 tends to rise according as the electrode 2 wears.

First, the relationship between the voltage and the degree of wear of the nozzle member 3 and the nozzle protection cover 4 will be described. Referring to Fig. 2, the axis of abscissa (horizontal axis) represents the bore diameter of the tip end of the nozzle member 3, and the axis of ordinate (vertical axis) represents the voltage between the nozzle member 3 and the nozzle protection cover 4. As a cutting condition, cutting current: 400 A, plasma gas: oxygen 35 (L/min), and assist gas: air 40 (L/min) were assumed.

As shown in Fig. 2, when the nozzle member 3 is a new one, the bore diameter is 3 mm, and voltage is 28 V. At the limit at which a good cutting can be made, the bore diameter increases to 3.3 mm, and the voltage falls to 20 V. By further continuing the cutting operation, a poor cutting occurs. At the limit at which an ordinary cutting can be made, the bore diameter increases to 3.6 mm, and the voltage falls to 7 V.

The reason why the degree of wear is detected using the nozzle member 3 as a target in Fig. 2 is that the wear of the nozzle member 3 gives a great influence on the processing precision. Namely, since the cross-sectional shape and the thickness of the plasma arc are determined by the shape and the bore diameter of the nozzle of the nozzle member, the influence given by the wear of the nozzle member on the processing precision is larger than that by the wear of the nozzle protection cover.

Namely, when the nozzle member and the nozzle protection cover wear, the plasma arc is sprayed by touching and passing through the inner surface of the nozzle formed in the nozzle member, so that the nozzle of the nozzle member is greatly influenced by the passing plasma arc and wears to increase its bore diameter by removal of the matrix material on the inner surface. Generally, the bore diameter of the nozzle formed in the nozzle protection cover is formed to be larger than the bore diameter of the nozzle of the nozzle member. Although the influence given by the passing plasma arc on the nozzle of the nozzle protection cover is smaller than that on the nozzle of the nozzle member, the nozzle of the nozzle protection cover wears to increase its bore diameter by removal of the matrix material on the inner surface. Therefore, in the example of Fig. 2, the change in the bore diameter of the nozzle member 3 is associated with the voltage, and the relationship is detected as a life duration of the nozzle member 3 and the nozzle protection cover 4.

According as the wear of the nozzle member 3 increases, the quality of the cut surface deteriorates, and eventually the cutting will be impossible.

Next, the wear of the electrode 2 will be described. The relationship between the degree of wear of the electrode 2 and the voltage is not particularly shown in the drawings, and thus, a qualitative description will be given. The voltage between the nozzle member 3 and the nozzle protection cover 4 increases according as the working hours of the electrode 2 increases.

Namely, the surface of the electrode 2 is melted and evaporated to form a recess (wears) in accordance with the generation of the plasma arc, and the distance between the point of generation of the plasma arc on the electrode 2 and the workpiece W increases. Since the plasma arc is controlled with a constant electric current, the voltage rises in accordance with the wear of the electrode 2. It seems that, by receiving this influence, the voltage between the nozzle member 3 and the nozzle protection cover 4 increases.

According as the wear of the electrode 2 increases, the roughness of the cut surface increases to deteriorate the quality, and eventually, the cutting will be impossible.

Next, description will be given on a case of recognizing the life duration on the basis of the degree of wear of the electrode 2 and the nozzle member 3 (nozzle protection cover 4). The increase in the wear of the electrode 2 and the nozzle member 3 gives influence on the quality of the cut surface, but the quality of the cut surface does not fall in a stepwise manner. Namely, the quality of the obtained cut surface is divided into those from a quality that can sufficiently function as precision cutting, successively to a little deteriorated quality, a considerably deteriorated quality, and to a quality that can no longer function as a cut surface.

Therefore, by setting a limit that can achieve any one of the qualities within the above stages in correspondence with the intended purpose of cutting, and by setting the voltage between the nozzle member 3 and the nozzle protection cover 4 at this limit as a predetermined value, the life duration of the electrode 2 and the nozzle member 3 can be detected.

Specifically, when the intended cut is a precision cut of the workpiece, the limit of wear of the electrode 2 and the nozzle member 3 that can perform the precision cut is empirically examined, and the voltage value between the nozzle member 3 and the nozzle protection cover 4 at this limit is examined (the voltage value for detecting the life expiration of the electrode 2 is higher than the initial voltage value, and the voltage value for detecting the life expiration of the nozzle member 3 is lower than the initial voltage value). By inputting these voltage values respectively into the recognition means 9 and comparing them with the measured voltage, the life duration can be detected.

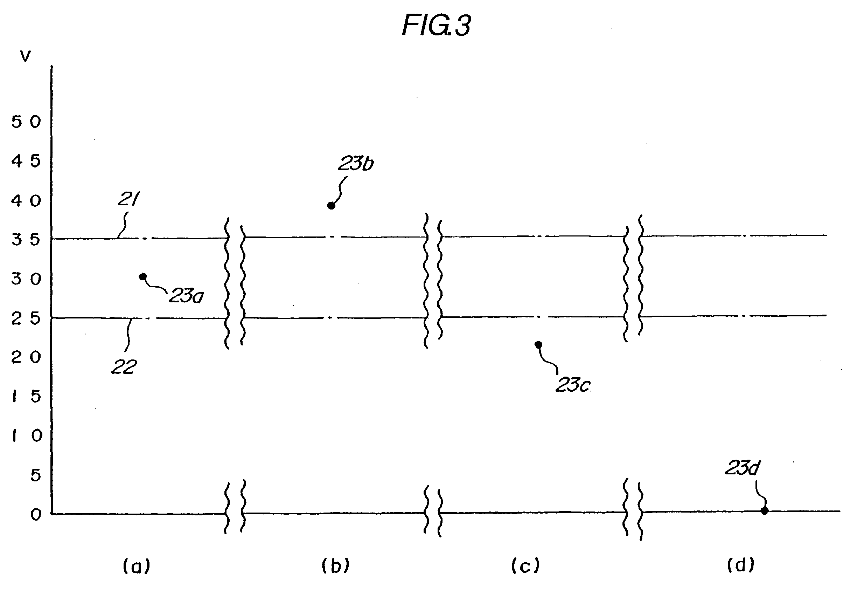

Fig. 3 is a view showing examples of the voltage in which the electrode, the nozzle member, and the nozzle protection cover of the plasma torch are (a) in the range such that the quality of the cut surface satisfies an intended cut, (b) in the range such that the electrode 2 is recognized to have reached the expiration of life, (c) in the range such that the nozzle member 3 is recognized to have reached the expiration of life, and (d) in the range such that the nozzle protection cover 4 is in contact with the workpiece W.

In Fig. 3, the line 21 indicates a predetermined value for recognizing that the electrode 2 has reached the expiration of life, and the line 22 indicates a predetermined value for recognizing that the nozzle member 3 has reached the expiration of life. The values of the lines 21, 22 have been empirically determined by the inventors of the present invention, and show the limits of the range in which the so-called precision cutting can be made with small roughness of the cut surface. The points 23a to 23d indicate the measured values of the voltage between the nozzle member 3 and the nozzle protection cover 4.

In Fig. 3 (a), the point 23a shows that the measured value of the voltage is 30 V which is between the lines 21 and 22, showing that neither of the electrode 2 and the nozzle member 3 has reached the expiration of life, namely, that the intended cut is normally performed.

In Fig. 3 (b), the point 23b shows that the measured value of the voltage is about 38 V which is above the line 21, showing that the electrode 2 has reached the expiration of life, and hence that the quality of the cut surface does not satisfy the intended quality. However, since the electrode 2 has not yet been destroyed in this state, there is still time for selecting whether an alarm for informing of the expiration of life of the electrode 2 is to be issued or the cut is to be stopped as soon as possible.

In Fig. 3 (c), the point 23c shows that the measured value of the voltage is about 22 V which is below the line 22, showing that the nozzle member 3 has reached the expiration of life, and hence that the quality of the cut surface does not satisfy the intended quality. However, since the nozzle member 3 has not yet been destroyed in this state, there is still time for selecting whether an alarm for informing of the expiration of life of the nozzle member 3 is to be issued or the cut is to be stopped as soon as possible.

In Fig. 3 (d), the point 23d shows that the measured value of the voltage is 0 V which is the grounded state, showing that the nozzle protection cover 4 is in direct contact with the workpiece W, or in indirect contact with the workpiece W (for example, the nozzle protection cover 4 is in contact with a tool or the like placed on the workpiece W, or the sputter adhering to the surface of the nozzle protection cover 4 has grown to touch the workpiece W) . In this case, the device is preferably adapted to stop the cutting operation as quickly as possible and to stop the movement of the plasma torch 1.

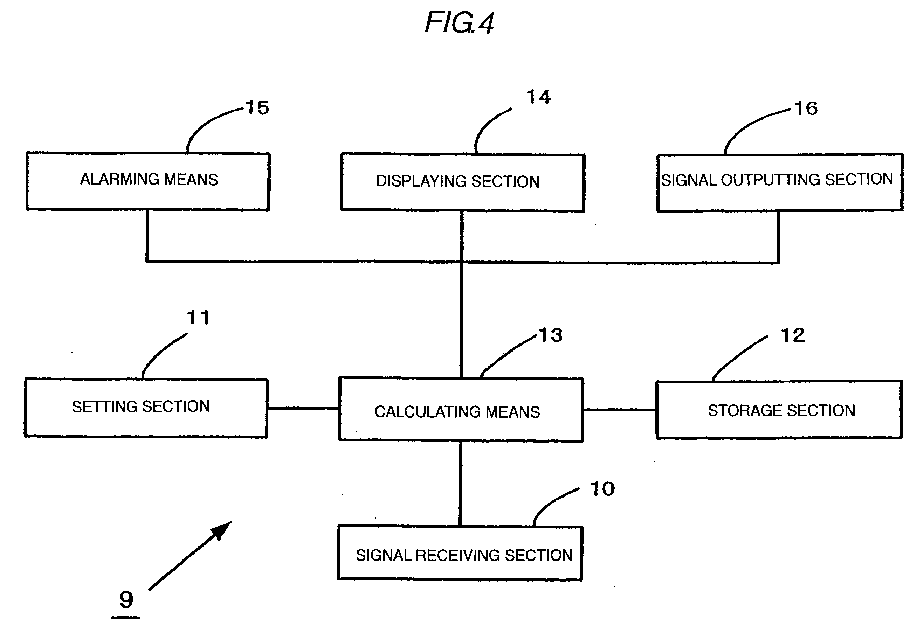

Fig. 4 is a diagram illustrating a construction of the recognition means 9. Referring to Fig. 4, the recognitionmeans 9 includes a signal receiving section 10, a setting section 11, a storage section 12, calculating means 13, a displaying section 14, alarming means 15, and a signal outputting section 16.

The signal receiving section 10 receives a detecting signal that is output from the voltmeter 7. The setting section 11 can set the voltages (predetermined values, the value of line 21, the value of line 22) that cause poor cutting or impossible cutting. The voltages (predetermined values) can be set in accordance with the requested processing precision. The storage section 12 stores data and others of the remaining processing time (the life duration of the torch main body 1, the life duration of the electrode 2 and the nozzle member 3) relative to the voltage.

The calculating means 13 calculates the remaining processing time (the life duration of the torch main body 1, the life duration of the electrode 2 and the nozzle member 3, i.e. the degree of wear) on the basis of the voltage detecting signal received by the signal receiving section 10, the voltages set in the setting section 11, and the data stored in the storage section 12. Here, the calculating means 13 may record in the storage section 12 the processing time and the rise and fall of the voltage received by the signal receiving section 10 during the cutting of the workpiece W, so as to calculate the remaining processing time until the cutting becomes poor or impossible on the basis of the voltages causing poor cutting or impossible cutting that have been set beforehand in the setting section 11.

The displaying section 14 displays the remaining processing time that has been calculated by the calculating means 13. This makes it possible to detect the life duration of the plasma torch without interrupting the cutting operation and observing the bore diameter of the tip end of the nozzle member 3 or the nozzle protection cover 4. Further, by knowing the life duration of the plasma torch, the operator can select the work that can be done within the remaining processing time and the like to prevent interruption of the process caused by the life expiration of the plasma torch during the processing.

The calculating means 13 recognizes the expiration of the life of the electrode 2, the nozzle member 3, and the nozzle protection cover 4 when the voltage (detecting signal) between the nozzle member 3 and the nozzle protection cover 4 that has been received by the signal receiving section 10 goes beyond the voltages (predetermined values) set by the setting section 11 at which the poor cutting or impossible cutting occurs. As described above, the voltages (predetermined values) can be set in accordance with the requested processing precision. For this reason, the life duration of the plasma torch can be detected in accordance with the requested processing precision.

The alarming means 15 is a siren, a lamp, or the like, and can inform the operator of the life duration of the nozzle member 3 and the nozzle protection cover 4 when the calculating means 13 recognizes the expiration of life or the remaining processing time becomes little. Also, a controlling panel or the like of a processing apparatus (not illustrated) is connected to the signal outputting section 16, whereby the processing operation can be automatically stopped when the calculating means 13 recognizes the expiration of life.

Next, the recognition of contact between the nozzle protection cover 4 and the workpiece W by the life duration detecting device will be described. The life duration detecting device is provided with a power source 8 for applying a voltage between the nozzle member 3 and the workpiece W. The power source 8 applies the voltage between the nozzle member 3 and the workpiece W when a plasma arc is not being generated (non-cutting time) . Here, in place of the power source 8, the negative electrode side of the plasma power source 5 may be connected to the electrode 2 or the nozzle member 3 via a switch (not illustrated).

When the nozzle protection cover 4 is brought into contact with the workpiece W, the voltage between the nozzle protection cover 4 and the nozzle member 3 that is detected by the voltmeter 7 falls. For example, a voltage of 7 V is applied between the nozzle member 3 and the workpiece W. In this case, the voltage between the nozzle protection cover 4 and the nozzle member 3 is 200 mV when the nozzle protection cover 4 is not in contact with the workpiece W, whereas the voltage falls to 20 mV when the nozzle protection cover 4 is in contact with the workpiece W.

The voltage between the nozzle protection cover 4 and the nozzle member 3 that is detected by the voltmeter 7 is transmitted to the signal receiving section 10 of the recognition means 9 as a detecting signal. By this, the calculating means 13 determines that the nozzle protection cover 4 has been brought into contact with the workpiece W when the signal receiving section 10 receives a voltage detecting signal below a predetermined value (for example, 20 mV) that has been set by the setting section 11. Then, an alarm is issued by the alarming means 15 to inform the operator that the nozzle protection cover 4 is in contact with the workpiece W. Here, the predetermined value of the voltage (for example, 20 mV) may be stored beforehand in the storage section 12.

With the above construction, the plasma torch life duration detecting device can detect whether the nozzle protection cover 4 is in a state of being in contact with the workpiece W before use without eye observation even if the plasma torch is in a stopped state.

Also, with one voltmeter 7 and recognition means 9, the life duration of the plasma torch (nozzle member 3, nozzle protection cover 4) can be detected, and the direct contact of the nozzle protection cover 4 with the workpiece W can be detected. For this reason, the contact between the nozzle protection cover and the workpiece can be detected with reduced number of detecting means and recognition means at a lower cost.

With an extremely simple structure in which the voltage between the nozzle member and the nozzle protection cover that are insulated from each other is measured and monitored, the plasma torch life duration detecting device of the invention can detect the life duration of the electrode, the nozzle member, and the nozzle protection cover, and also can detect the contact of the nozzle protection cover with the workpiece. For this reason, the plasma torch life duration detecting device of the invention can be applied to plasma torches such as a plasma cutting torch, a plasma welding torch, and a plasma spraying torch.

## Claims

1. A plasma torch life duration detecting device for detecting a life duration of a plasma torch in which a nozzle member (3) having an electrical conductivity is disposed outside of an electrode (2) to maintain electrical insulation against the electrode (2), and a nozzle protection cover (4) having an electrical conductivity is disposed outside of the nozzle member (3) to maintain electrical insulation against the nozzle member (3), the life duration detecting device comprising voltage detecting means disposed between the nozzle member (3) and the nozzle protection cover (4), for detecting a voltage between the nozzle member (3) and the nozzle protection cover (4),
wherein the life duration of the plasma torch is detected by use of the voltage detected by the voltage detecting means.

2. The plasma torch life duration detecting device according to claim 1, comprising recognition means (9) for recognizing a degree of wear of the nozzle member (3) and the nozzle protection cover (4) by use of the voltage detected by the voltage detecting means while a plasma arc is being generated.

3. The plasma torch life duration detecting device according to claim 1, comprising recognition means for recognizing the life duration of the nozzle member (3) and the nozzle protection cover (4) when the voltage detected by the voltage detecting means while a plasma arc is being generated exceeds a predetermined value.

4. The plasma torch life duration detecting device according to claim 1, comprising:
a power source (8) for applying a voltage between the nozzle member (3) and a workpiece (W); and
recognition means (9) for recognizing contact between the nozzle protection cover (4) and the workpiece (W) by use of the voltage detected by the voltage detecting means through application of the voltage by the power source (8) while a plasma arc is not being generated.

5. The plasma torch life duration detecting device according to claim 1, comprising recognition means (9) for recognizing a degree of wear of the electrode (2) by use of the voltage detected by the voltage detecting means while a plasma arc is being generated.

6. The plasma torch life duration detecting device according to claim 1, comprising recognition means (9) for recognizing the life duration of the electrode (2), the nozzle member (3), and the nozzle protection cover (4) when the voltage detected by the voltage detecting means while a plasma arc is being generated goes out of a predetermined range.

7. The plasma torch life duration detecting device according to claim 1, comprising recognition means (9) for recognizing contact between the nozzle protection cover (4) and the workpiece (W) by use of the voltage detected by the voltage detecting means while a plasma arc is being generated.
